# EUROPÄISCHE PATENTSCHRIFT

(11) **EP 2 474 055 B1**
(45) Veröffentlichungstag und Bekanntmachung des Hinweises auf die Patenterteilung: **09.04.2014**
(21) Anmeldenummer: 10749475.9
(22) Anmeldetag: 27.08.2010
(51) Int. Cl.: H01M 2/02, H01M 2/10, H01M 6/50, H01M 10/04, H01M 10/613, H01M 10/615, H01M 10/625, H01M 10/652, H01M 10/6551, H01M 10/6555, H01M 10/6557, H01M 10/635, H01M 10/647, H01M 10/0525

(54) **ELEKTROCHEMISCHER ENERGIESPEICHER FÜR FAHRZEUGE UND VERFAHREN ZUM KÜHLEN ODER ERWÄRMEN EINES SOLCHEN ELEKTROCHEMISCHEN ENERGIESPEICHERS**
ELECTROCHEMICAL ENERGY STORE FOR VEHICLES AND METHOD FOR COOLING OR HEATING SUCH AN ELECTROCHEMICAL ENERGY STORE
ACCUMULATEUR D'ÉNERGIE ÉLECTROCHIMIQUE POUR VÉHICULES ET PROCÉDÉ PERMETTANT DE REFROIDIR OU DE RÉCHAUFFER UN TEL ACCUMULATEUR D'ÉNERGIE ÉLECTROCHIMIQUE

(30) Priorität: 04.09.2009 DE 102009040147
(43) Veröffentlichungstag der Anmeldung: 11.07.2012
(73) Patentinhaber: Li-Tec Battery GmbH, 01917 Kamenz (DE)
(72) Erfinder: HOHENTHANNER, Claus-Rupert, 63457 Hanau (DE); BRASSE, Claudia, 50933 Köln (DE); FUCHS, Andreas, 04229 Leipzig (DE); KAISER, Jörg, 76344 Eggenstein (DE); GUTSCH, Andreas, 59348 Luedinghausen (DE); SCHAEFER, Tim, 99768 Harztor (DE)
(74) Vertreter: Wallinger, Michael
(86) Internationale Anmeldenummer: PCT/EP2010/005289
(87) Internationale Veröffentlichungsnummer: WO 2011/026592

(56) Entgegenhaltungen:
- WO-A2-03/071616
- DE-A1- 4 340 007
- DE-A1- 19 503 085
- DE-A1-102007 063 191
- JP-A- 2004 227 986
- JP-A- 2009 140 714
- US-A- 1 881 461

## Beschreibung

Die vorliegende Erfindung betrifft einen elektrochemischen Energiespeicher für Fahrzeuge und ein Verfahren zum Kühlen oder Erwärmen eines solchen elektrochemischen Energiespeichers, insbesondere eines lithium-Ionen-Akkumulators. Die Erfindung kann aber auch bei elektrochemischen Energiespeichern ohne Lithium und auch unabhängig von Fahrzeugen Anwendung finden.

Aus dem Stand der Technik sind zahlreiche Bauformen von elektrochemischen Energiespeichern mit galvanischen Zellen zur Speicherung elektrischer Energie bekannt. Dabei wird die einem solchen Energiespeicher zugeführte elektrische Energie in chemische Energie gewandelt und gespeichert. Diese Wandlung ist verlustbehaftet, weil während dieser Wandlung unumkehrbare (irreversible) chemische Reaktionen auftreten, welche eine Alterung oder Schädigung des Akkumulators bewirken. Die dabei auftretenden Energieverluste werden in Form von Wärme freigesetzt, was mit einer Temperaturerhöhung der galvanischen Zelle verbunden sein kann.

Steigt die Temperatur in der galvanischen Zelle zu sehr an, besteht die Gefahr einer Zerstörung des Energiespeichers, wobei dieser unter bestimmten Voraussetzungen brennen oder explodieren kann. Solche unerwünschten Phänomene können durch eine möglichst wirksame Kühlung des elektrochemischen Energiespeichers vermieden werden.

Andererseits arbeiten viele elektrochemische Energiespeicher erst oberhalb einer von ihrer Bauart und ihrem Wirkprinzip abhängigen unteren Betriebstemperatur effizient oder zuverlässig. Deshalb kann es, je nach dem Einsatzzweck oder der Anwendung eines elektrochemischen Energiespeichers wünschenswert sein, dessen Temperatur durch Wärmezufuhr zu erhöhen.

Bei der Verwendung von elektrochemischen Energiespeichern in Fahrzeugen sind weitere Anforderungen zu berücksichtigen, die mit den im Fahrzeug auftretenden Kräften, beispielsweise Trägheitskräften zu tun haben, welche auf das Batteriegehäuse und die Zelle übertragen werden. Solche Kräfte können zu Schwingungen der Zellen im Batteriegehäuse oder zu anderen unerwünschten Relativbewegungen galvanischer Zellen im Batteriegehäuse führen.

Ähnliche Wirkungen können auch außerhalb von Fahrzeugen auftreten, beispielsweise im Zusammenhang mit Industrieanlagen, an denen Vibrationen oder Erschütterungen auftreten können.

Die JP2004227986 (A) offenbart eine Speicherbatterie mit einem Gehäuse, in dem eine Mehrzahl von Zellen angeordnet ist.

Der vorliegenden Erfindung liegt daher die Aufgabe zugrunde, einen insbesondere für den Betrieb in Fahrzeugen geeigneten elektrochemischen Energiespeicher und ein möglichst wirkungsvolles Verfahren zum Kühlen oder zum Erwärmen eines solchen elektrochemischen Energiespeichers anzugeben.

Dies wird erfindungsgemäß durch die Gegenstände der unabhängigen Ansprüche erreicht.

Der erfindungsgemäße elektrochemische Energiespeicher weist ein Gehäuse auf, in dem eine Mehrzahl von flachen galvanischen Zellen angeordnet ist. Zwischen zwei benachbarten flachen galvanischen Zellen ist jeweils ein flacher Wärmeleitkörper angeordnet.

Im Zusammenhang mit der Beschreibung der vorliegenden Erfindung soll unter einem elektrochemischen Energiespeicher jede Art von Energiespeicher verstanden werden, dem elektrische Energie entnommen werden kann, wobei eine elektrochemische Reaktion im Inneren des Energiespeichers abläuft. Der Begriff umfasst insbesondere galvanische Zellen aller Art, insbesondere Primärzeiten, Sekundärzellen und Zusammenschaltungen solcher Zellen zu Batterien aus solchen Zellen. Solche elektrochemischen Energiespeicher weisen üblicherweise negative und positive Elektroden auf, die durch einen so genannten Separator getrennt sind. Zwischen den Elektroden findet ein Ionentransport durch einen Elektrolyten statt.

Unter einem flachen körperlichen Gegenstand soll im Zusammenhang mit der vorliegenden Erfindung ein Gegenstand verstanden werden, der im Wesentlichen die Form eines geraden Prismas besitzt, dessen Grund- und Deckfläche wesentlich größer sind als seine Mantelfläche. Wie in der Geometrie üblich, soll dabei unter einem Prisma ein geometrischer Körper verstanden werden, der ein Vieleck als Grundfläche hat und dessen Seitenkanten im Wesentlichen parallel und im Wesentlichen gleich lang sind. Dem in der Geometrie üblichen Sprachgebrauch folgend, entsteht ein solches Prisma durch Parallelverschiebung eines ebenen Vielecks entlang einer nicht in dieser Ebene liegenden Geraden im Raum. Erfolgt dieses Parallelverschiebung des Vielecks senkrecht zur Fläche des Vielecks, dann spricht man von einem geraden Prisma. Das Vieleck wird üblicherweise als Grundfläche bezeichnet, die andere dazu kongruente und parallele Begrenzungsfläche des Prismas als seine Deckfläche. Die Gesamtheit aller übrigen Begrenzungsflächen wird auch als Mantelfläche des Prismas bezeichnet. Gelegentlich werden Teile dieser Mantelfläche auch als Stirnfläche(n) bezeichnet.

Wichtige Beispiele solcher prismatischen galvanischen Zellen sind so genannte Pouchzellen oder auch sogenannte Coffee-Bag-Zellen, welche üblicherweise im Wesentlichen die Form eines flachen Quaders, häufig mit abgerundeten Ecken, einnehmen. Bei solchen galvanischen Zellen bezieht sich die prismatische Form häufig nur auf das Gehäuse oder die Folienverpackung der Zelle, da die elektrischen Anschlusskontakte, welche auch häufig als Ableiter bezeichnet werden, aus dem prismatisch geformten Gehäuse oder der prismatisch geformten Verpackung heraus ragen.

Solche flachen körperlichen Gegenstände können nun raumsparend so angeordnet werden, dass sie an den Berührungsflächen, meistens an ihren Grund- oder Deckflächen, eine Kraft im Sinne einer Flächenpressung aufeinander ausüben.

Unter einer Flächenpressung versteht man üblicherweise die Kraft pro Flächeneinheit, welche zwischen zwei sich flächenhaft berührenden Festkörpern wirkt. Werden zwei Festkörper mit einer Kraft aufeinander gedrückt, dann stellt sich in der Berührungsfläche zwischen den Körpern eine Normallastverteilung ein, die auch als Flächenpressung bezeichnet wird. Die Flächenpressung ist im Gegensatz zum Druck nicht isotrop, d.h. die Flächenpressung hat - wie eine Spannung - eine Richtung, und sie ist über die Berührungsfläche nicht notwendigerweise konstant. Unter der Wirkung der Flächenpressung stellt sich in den beteiligten Körpern eine charakteristische Spannungsverteilung ein.

Unter einem Wärmeleitkörper soll im Zusammenhang mit der vorliegenden Erfindung ein körperlicher Gegenstand verstanden werden, der zur Leitung von Wärme, insbesondere zur Ableitung von Wärme von einem Körper, mit welchem er in Kontakt gebracht wird, geeignet ist.

Unter einem elastischen Körper soll im Zusammenhang mit der vorliegenden Erfindung ein körperlicher Gegenstand verstanden werden, der unter dem Einwirken einer äußeren Kraft eine so genannte elastische Verformung erleidet. Der elastische Körper setzt dabei der von außen wirkenden Kraft eine entsprechende Gegenkraft entgegen, welche mit fortschreitender Verformung wächst, sodass die Verformung schließlich im Kräftegleichgewicht zum Stillstand kommt. Für elastische Körper ist es charakteristisch, dass beim Wegfall der äußeren Kraft die Verformung sich vollständig zurückbildet. Im Zusammenhang mit der vorliegenden Erfindung soll unter einem elastischen Körper auch ein im Wesentlichen elastischer Körper verstanden werden, bei dem die idealen elastischen Eigenschaften ideal elastischer Körper wenigstens annähernd gegeben sind.

Im Zusammenhang mit der Beschreibung der vorliegenden Erfindung soll unter einem Wärmetransportmedium ein gasförmiges oder flüssiges Material verstanden werden, das aufgrund seiner physikalischen Eigenschaften geeignet ist, Wärme durch Wärmeleitung und/oder Wärmetransport über Konvektionsströme im Wärmetransportmedium zu transportieren. Wichtige Beispiele für allgemein in der Technik verwendete Wärmetransportmedien sind beispielsweise Luft oder Wasser. Je nach dem Anwendungszusammenhang sind auch andere Gase oder Flüssigkeiten gebräuchlich, etwa chemisch inerte (wenig reaktionsfähige) Gase oder Flüssigkeiten, wie beispielsweise Edelgase oder verflüssigte Edelgase oder Stoffe mit hoher Wärmekapazität und/oder Wärmeleitfähigkeit.

Vorteilhafte Ausführungsformen und Weiterbildungen sind Gegenstand der Unteransprüche.

Eine bevorzugte Ausführungsform des erfindungsgemäßen elektrochemischen Energiespeichers ist dadurch gekennzeichnet, dass die flachen galvanischen Zellen, die flachen Wärmeleitkörper und/oder die flachen elastischen Körper an den Berührungsflächen eine Kraft im Sinne einer Flächenpressung aufeinander ausüben. Durch eine derartige Kraft werden der Kontakt der sich berührenden Flächen und damit der Wärmeübergang durch diese Flächen regelmäßig verbessert, weil hierdurch kleine Abweichungen der Kontaktflächen von einer idealen Planarität weitgehend ausgeglichen werden können. Das gilt besonders dann, wenn beispielsweise das Gehäuse einer so genannten Coffeebag-Zelle durch eine Folie gebildet wird, die sich bei ausreichendem Druck gegen eine nicht ideale Ebene, wie sie die Kontaktfläche eines Wärmeleitkörpers vorzugsweise bildet, den Abweichungen dieser Fläche von der idealen Ebene leicht anpassen kann.

Eine weitere bevorzugte Ausführungsform des erfindungsgemäßen elektrochemischen Energiespeichers ist dadurch gekennzeichnet, dass das Gehäuse mindestens eine Wand mit einer Struktur oder mit Strukturen aufweist, in die mindestens ein Wärmeleitkörper so eingreift, dass dieser Wärmeleitkörper in Richtung der an den Berührungsflächen wirkenden Kraft nicht verschiebbar ist. Die Wärmeleitkörper dienen bei diesem Ausführungsbeispiel also vorzugsweise gleichzeitig als Befestigungsplatten, die sicherstellen sollen, dass im Fahrzeug auftretende Kräfte nicht zu unerwünschten Verschiebungen der galvanischen Zellen führen können.

Eine weitere bevorzugte Ausführungsform des erfindungsgemäßen elektrochemischen Energiespeichers ist dadurch gekennzeichnet, dass die Wärmeleitkörper mit Wärmetauschelementen wärmeleitend in Verbindung stehen, die aus dem Gehäuse heraus ragen. Solche Wärmetauschelemente sind geeignet, den Wärmeübergang vom Wärmeleitkörper und damit von der durch den Wärmeleitkörper berührten galvanischen Zelle an die Umgebung zu verbessern.

Eine weitere bevorzugte Ausführungsform des erfindungsgemäßen elektrochemischen Energiespeichers ist dadurch gekennzeichnet, dass die Wärmeleitkörper mit Gehäuseteilen wärmeleitend in Verbindung stehen, die Kanäle aufweisen, durch welche ein gasförmiges oder flüssiges Wärmetransportmedium fließen kann. Dazu alternativ oder in Kombination kann der elektrochemische Energiespeicher mit Wärmeleitkörpern ausgestattet sein, welche Kanäle aufweisen, durch welche ein gasförmiges oder flüssiges Wärmetransportmedium fließen kann.

Einige der beschriebenen Ausführungsformen der vorliegenden Erfindung wird der Fachmann anhand seines Fachwissens zu kombinieren wissen; andere Ausführungsbeispiele, die hier oder in der nachfolgenden Beschreibung nicht abschließend beschrieben werden können, wird der Fachmann mit Hilfe seines Fachwissens anhand der vorliegenden Beschreibung leicht auffinden können. Die Erfindung ist nicht auf die hier beschriebenen Ausführungsbeispiele beschränkt.

Im Folgenden wird die Erfindung anhand bevorzugter Ausführungsbeispiele und mit Hilfe der Figuren näher beschrieben. Dabei zeigen:
- Fig. 1: einen erfindungsgemäßen elektrochemischen Energiespeicher gemäß einer ersten Ausführungsform der Erfindung;
- Fig. 2: einen erfindungsgemäßen elektrochemischen Energiespeicher gemäß einer zweiten Ausführungsform der Erfindung mit Wärmetauschelementen an den Wärmeleitkörpern;
- Fig. 3: einen erfindungsgemäßen elektrochemischen Energiespeicher gemäß einer dritten Ausführungsform der Erfindung mit Kanälen in Gehäuseteilen;
- Fig. 4: einen erfindungsgemäßen elektrochemischen Energiespeicher gemäß einer vierten Ausführungsform der Erfindung mit Kanälen in den Wärmeleitkörpern;
- Fig. 5: einen erfindungsgemäßen elektrochemischen Energiespeicher gemäß einer fünften Ausführungsform der Erfindung mit Kanälen in den Wärmeleitkörpern und in Gehäuseteilen;
- Fig. 6: einen erfindungsgemäßen elektrochemischen Energiespeicher gemäß einer sechsten Ausführungsform der Erfindung mit Wärmetauschelementen an den Wärmeleitkörpern und mit Kanälen in den Wärmeleitkörpern und in Gehäuseteilen; und
- Fig. 7: einen erfindungsgemäßen elektrochemischen Energiespeicher gemäß einer siebten Ausführungsform der Erfindung.

Der erfindungsgemäße elektrochemische Energiespeicher weist ein Gehäuse 2 auf, in dem eine Mehrzahl von flachen galvanischen Zellen 3 angeordnet ist. Zwischen jeweils zwei benachbarten flachen galvanischen Zellen 3 ist ein flacher Wärmeleitkörper 4 und/oder ein flacher elastischer Körper 5 angeordnet.

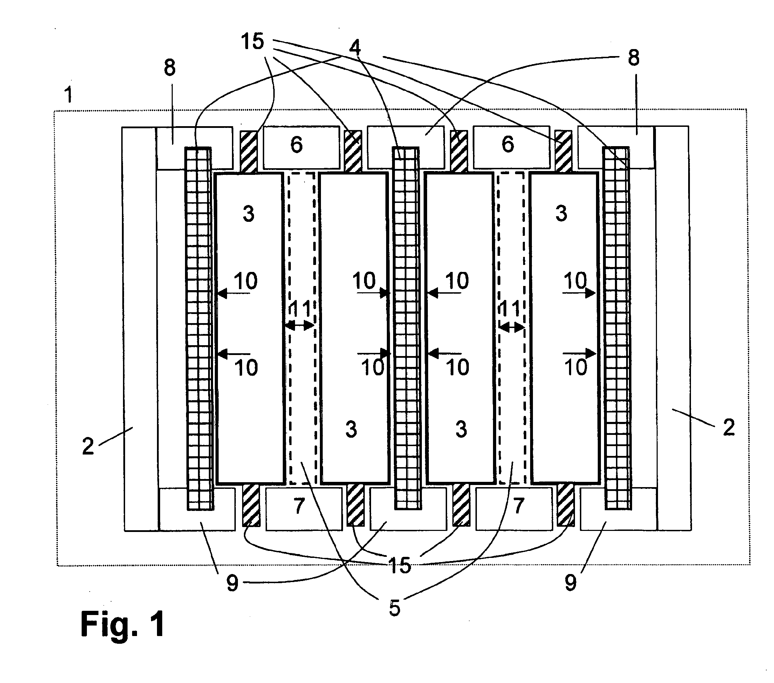

Wie beispielsweise in Fig. 1 schematisch dargestellt ist, befinden sich auf den beiden großen Flächen einer prismatischen galvanischen Zelle 3 vorzugsweise jeweils ein Wärmeleitkörper 4 und ein elastischer Körper 5. Bei entsprechender Dimensionierung der Abstände und der Volumina der Zellen und der elastischen Körper 5 lässt sich dabei erreichen, dass die elastischen Körper 5 durch Kräfte 11, die zwischen den Berührungsflächen der Zellen und der elastischen Körper wirken, zusammengedrückt werden. Durch diese Maßnahme lässt sich erreichen, dass an den Berührungsflächen der beteiligten Körper, nämlich an den Berührungsflächen der Wärmeleitkörper 4, der galvanischen Zellen 3 und der elastischen Körper 5 eine Flächenpressung entsteht, welche bewirkt, dass die galvanischen Zellen 3 zwischen den Wärmeleitkörpern 4 eingezwängt und damit sozusagen fixiert werden.

Da jeweils eine Oberfläche der galvanischen Zellen 3 mit einem Wärmeleitkörper 4 in thermischem Kontakt steht, kann dieser Wärmeleitkörper 4 die an der Kontaktfläche auftretende Wärme durch sein Wärmeleitungsvermögen ableiten. Ist der Wärmeleitkörper 4 zusätzlich mechanisch in entsprechenden Strukturen 9 des Gehäuses fixiert, sodass eine Verschiebung der Wärmeleitkörper senkrecht zu den Berührungsflächen nicht stattfinden kann, dann ist auch eine Verschiebung der galvanischen Zellen 3 in der Richtung senkrecht zu den Berührungsflächen damit unterbunden oder zumindest erschwert oder auf ein Minimum beschränkt.

Der Druck der bestehenden Flächenpressung sorgt ferner dafür, dass die galvanischen Zellen 3 jeweils an die angrenzenden Wärmeleitkörper 4 gedrückt werden, wodurch der Wärmeübergang zwischen den galvanischen Zellen 3 und den Wärmeleitkörpern 4 verbessert wird. Im Fall der Kühlung der galvanischen Zellen 3 verdeutlichen die Pfeile 10 den Wärmestrom aus den galvanischen Zellen 3 in die Wärmeleitkörper 4. Die Pfeile 10 verdeutlichen gleichzeitig die Kraft, mit der die galvanischen Zellen 3 an die Wärmeleitkörper 4 gedrückt werden.

Wie in Fig. 1 dargestellt, üben die flachen galvanischen Zellen 3 und die flachen Wärmeleitkörper 4 an den Berührungsflächen eine Kraft 11 im Sinne einer Flächenpressung aufeinander aus. Erfindungsgemäß wird dies dadurch erreicht, dass das Gehäuse mindestens eine Wand mit einer Struktur oder mit Strukturen 8, 9 aufweist, in die mindestens ein Wärmeleitkörper 4 so eingreift, dass dieser Wärmeleitkörper in Richtung der an die Berührungsflächen wirkenden Kraft 11 nicht verschiebbar ist.

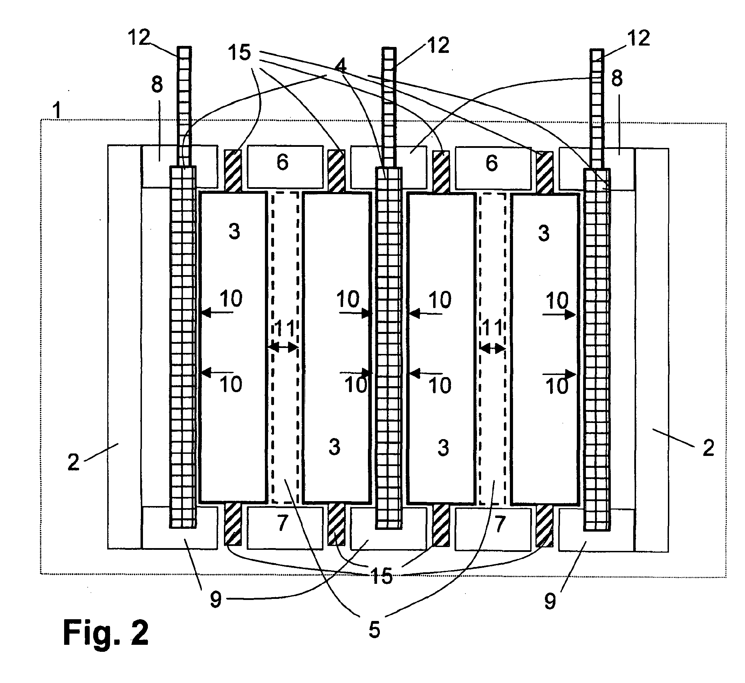

Fig. 2 zeigt eine weitere bevorzugte Ausführungsform der Erfindung, bei der die Wärmeleitkörper mit Wärmetauschelementen 12 wärmeleitend in Verbindung stehen, die aus dem Gehäuse 2 heraus ragen. Solche Wärmetauschelemente 12 können vorzugsweise in Form von Kühlflächen oder Kühlrippen oder in ähnlicher Weise ausgeführt werden. Vorteilhaft ist es dabei, wenn diese Wärmetauschelemente 12 die Wärmeübergangsfläche der Wärmeleitkörper 4 zu einem Wärmetransportmedium möglichst vergrößern, um auf diese Art und Weise einen möglichst effizienten Wärmeübergang zwischen den Wärmeleitkörpern 4 und der Umgebung herzustellen.

Solche Wärmetauschelemente 12 und die Wärmeleitkörper 4 können andererseits nicht nur zur Kühlung der galvanischen Zellen 3 dienen, sondern auch zu ihrer Erwärmung. Befinden sich die galvanischen Zellen 3 beispielsweise unterhalb ihrer Betriebstemperatur, dann ist eine wirkungsvolle Erwärmung dieser galvanischen Zellen möglich, indem die Wärmeleitkörper 4 erwärmt werden und die Wärmeleitkörper 4 diese Wärme an die galvanischen Zellen 3 über die gemeinsame Kontaktfläche abgeben. In diesem Fall fließt der Wärmestrom umgekehrt zu der durch die Pfeile 10 dargestellten Richtung.

Auch in diesem Fall können die Wärmetauschelemente 12 eine vorteilhafte Ausführungsvariante darstellen, beispielsweise dann, wenn ein Wärmetransportmedium mit einer Temperatur, die über der momentanen Temperatur der galvanischen Zellen liegt, diese Wärmetauschelemente umströmt.

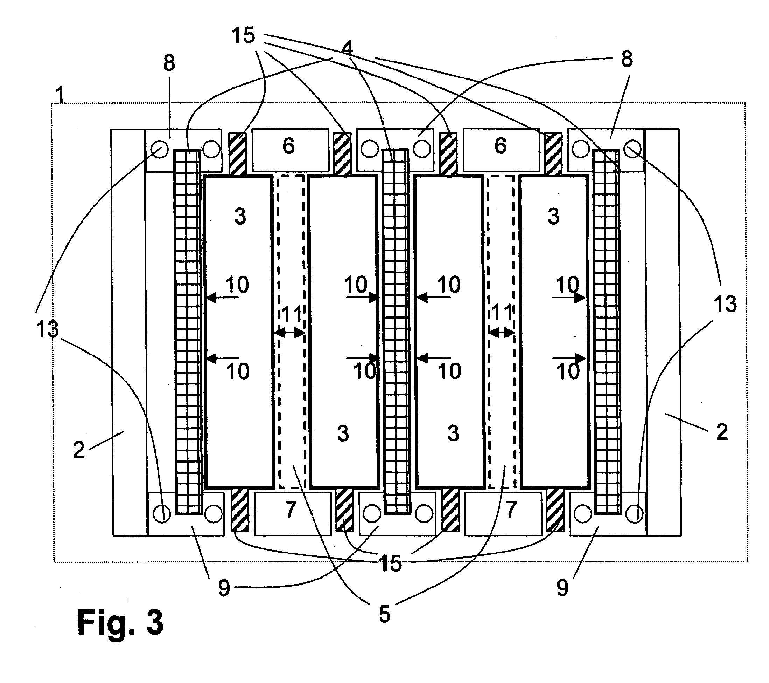

Fig. 3 zeigt eine weitere bevorzugte Ausführungsform der Erfindung, bei der die Gehäuseelemente 8, 9 Kanäle 13 aufweisen, durch welche ein gasförmiges oder flüssiges Wärmetransportmedium fließen kann. Bei dieser Ausführungsform der Erfindung ist ein besonders guter Wärmeleitkontakt zwischen den Gehäuseteilen 8, 9 und den Wärmeleitkörpern 4)besonders vorteilhaft, weil auf diese Art und Weise die Wärmeströme zwischen den galvanischen Elementen 3 und den Kanälen 13, durch die das Wärmetransportmedium fließt, besonders wirkungsvoll zum Wärmeaustausch beitragen können.

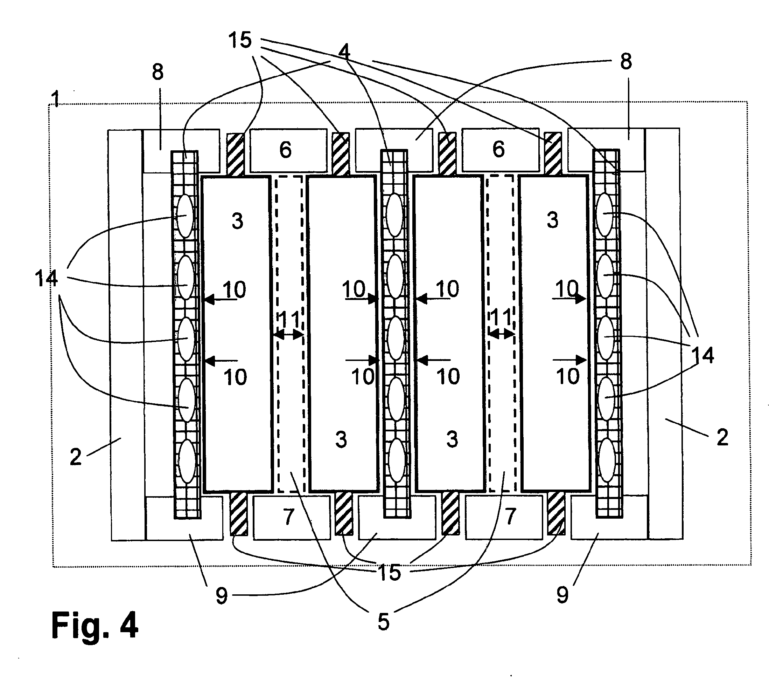

Fig. 4 zeigt eine weitere Ausführungsform der Erfindung, bei der die Wärmeleitkörper 4 selbst von Kanälen 14 durchzogen sind, durch welche ein gasförmiges oder flüssiges Wärmetransportmedium fließen kann. Bei dieser Ausführungsform der Erfindung können die Gehäuseteile 8, 9 vorteilhaft als wärmeisolierende Gehäuseteile ausgeführt werden, weil der Wärmetransport nicht über diese Gehäuseteile erfolgen muss. Ein weiterer Vorteil dieser Ausführungsform besteht darin, dass die Wärmetransportwege zwischen den Wärmequellen oder Wärmesenken, nämlich den galvanischen Zellen 3 und dem Wärmetransportmedium geringer sind als bei den anderen hier gezeigten Ausführungsformen der Erfindung.

Erfindungsgemäß werden die Gehäuseteile 8, 9 als elastische Körper ausgeführt. Hierdurch kann eine weitere Verbesserung der elastischen Lagerung der elektrochemischen Zellen 3 erreicht werden.

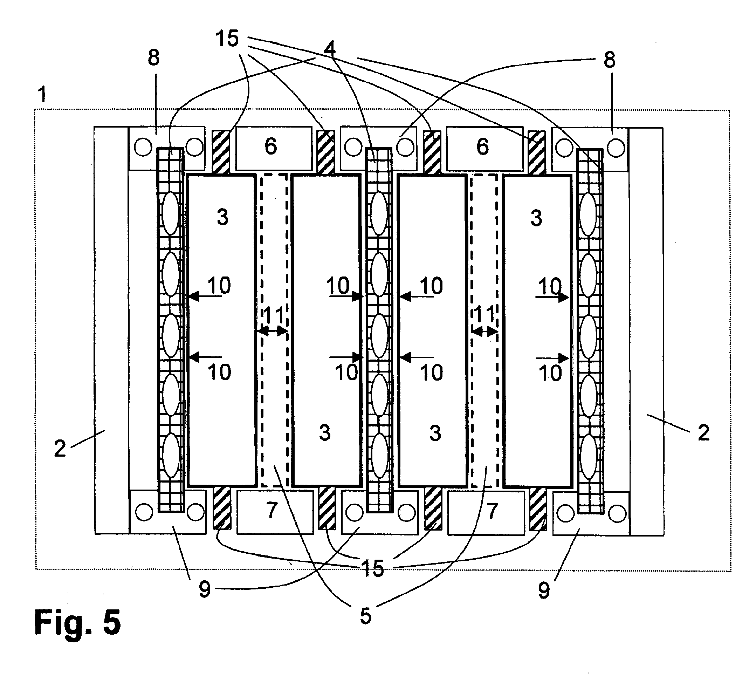

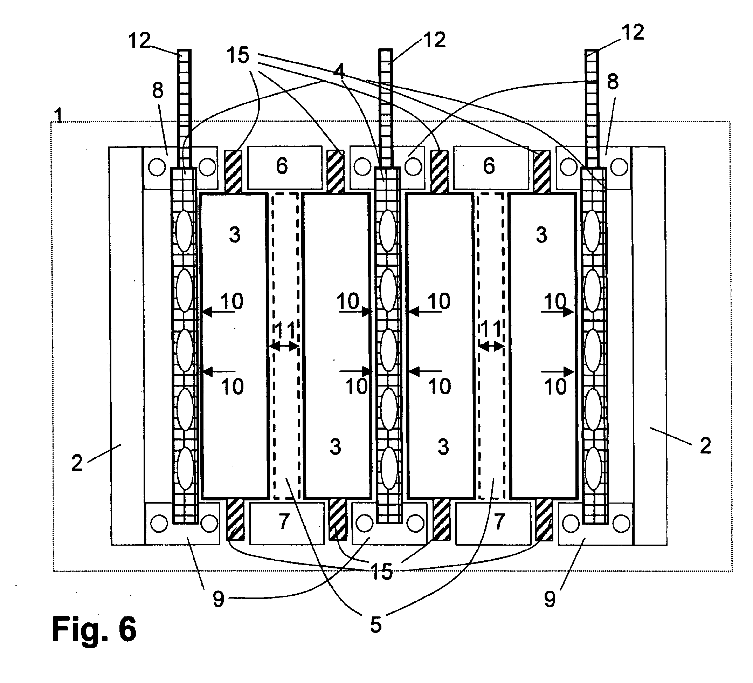

Fig. 5 und 6 zeigen Kombinationen bereits beschriebener Ausführungsformen der Erfindung, die mit weiteren Steigerungen der Wirksamkeit des Wärmetransports zwischen den galvanischen Zellen 3 und der Umgebung verbunden sind.

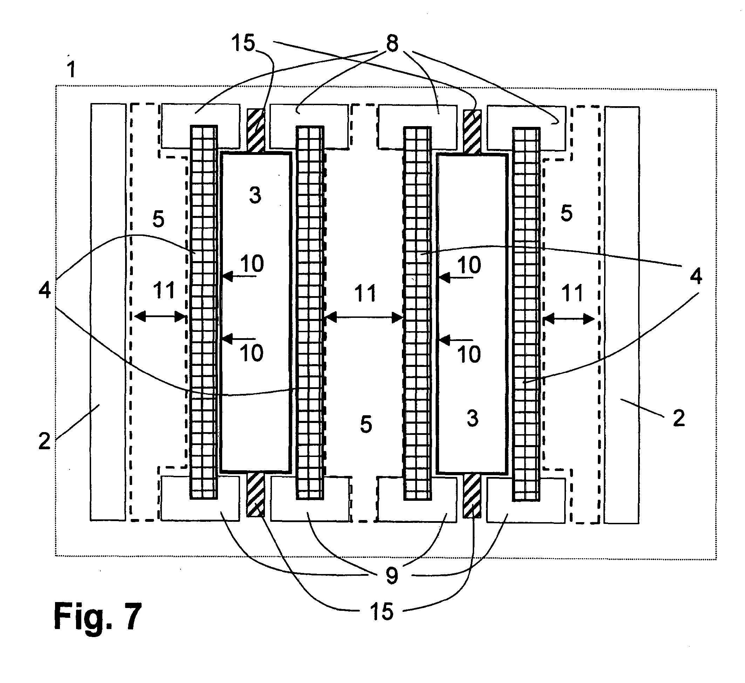

In Fig. 7 wird eine weiter Ausführungsform der Erfindung in schematischer Weise verdeutlicht, bei der die elektrochemischen ("galvanischen") Zellen 3 beidseitig von Wärmeleitkörpern 4 berührt werden, wodurch die Wirksamkeit der Kühlung und/oder Erwärmung dieser Zellen weiter erhöht werden kann. Eine Flächenpressung kann vorzugsweise durch zwischen diesen Aggregaten aus je einer Zelle 3 und zwei Wärmeleitkörpern 4 angeordnete, gepresste elastische Körper 5 aufgebaut werden.

Die gezeigten konstruktiven Maßnahmen haben je nach Ausführungsbeispiel der Erfindung unterschiedliche Vorteile. Sie tragen in unterschiedlicher Weise zur Erreichung des Ziels bei, dass möglichst alle im Fahrzeug auftretenden Kräfte von den galvanischen Zellen 3 auf das Batteriegehäuse 2 übertragen werden. Durch diese Kraftübertragung kann sichergestellt werden, dass keine Schwingungen der galvanischen Zellen 3 oder Relativbewegungen von galvanischen Zellen 3 und Batteriegehäuse 2 auftreten.

Vorzugsweise werden dabei mehrere Zellen 3 zwischen Wärmeleitblechen als Wärmeleitkörpern 4 oder Faserverbundplatten mit einer voreingestellten Flächenpressung zwischen der Zelloberfläche und den Wärmeleitblechen, die gleichzeitig als Befestigungsplatten dienen, wenn sie in den Strukturen 8, 9 des Gehäuses verankert sind, angeordnet. Die Befestigungsplatten 4 übertragen dabei orthogonale Massenkräfte in Richtung der Pfeile 10 von der Oberfläche des Elektrodenpakets auf ein Zwischenprofil 8, 9 oder direkt an das Batteriegehäuse. Die Befestigungsplatten tragen außerdem als Wärmeleitkörper 4 zur Wärmeleitung von der Oberfläche der galvanischen Zellen 3 an die Umgebung, beispielsweise an einen Kühlkreislauf bei.

Vorzugsweise sind die Befestigungsplatten so ausgeführt, dass eine Übertragung der Massenkräfte ohne Spiel und ohne Relativbewegung zwischen der galvanischen Zelle und der Befestigungsplatte erfolgt. Mögliche Ausführungsformen sind dabei Schraubverbindungen zwischen der Befestigungsplatte und dem Batteriegehäuse oder zwischen der Befestigungsplatte und einem Zwischenprofil 8, 9.

Eine andere Möglichkeit besteht darin, eine Nut im Batteriegehäuse oder in einem Zwischenprofil so vorzusehen, dass die Befestigungsplatte in diese Nut fasst. Dazu alternativ können Befestigungsplatte und Zwischenprofil auch als ein vorzugsweise einstückiges Bauteil ausgeführt und dann mit dem Batteriegehäuse verschraubt werden. Bei dieser Variante käme eine Befestigungsplatte mit umlaufendem Rahmen zum Einsatz. Dazu alternativ können Befestigungsplatte und Batteriegehäuse auch als ein vorzugsweise einstückiges Bauteil ausgeführt werden. Eine weitere Möglichkeit zur Realisierung der Erfindung besteht darin, die Bodenplatte, die Befestigungsplatte und/oder die Zwischenprofile mit den Seitenwänden oder dem Deckel des Batte1 riegehäuses zu einer tragenden Struktur von hoher Beul- und Biegesteifigkeit zu verbinden.

Bei den entsprechenden Ausführungsformen der Erfindung überträgt das Zwischenprofil auch horizontale und vertikale Massenkräfte von den Stirnseiten der galvanischen Zelle 3 an das Batteriegehäuse 2.

Sofern die Dicke der galvanischen Zellen im Betrieb Änderungen unterliegt, was beispielsweise bei Lithium-Ionen-Flachzellen der Fall sein kann, kann diese Dickenänderung durch eine Verformung der elastischen Körper 5 zwischen je zwei galvanischen Zellen ausgeglichen werden.

Die bei einigen Ausführungsbeispielen der Erfindung vorgesehenen Kanäle dienen dem Durchfluss eines Wärmetransportmediums zur Verbesserung der Wirksamkeit der Kühlung oder Erwärmung des elektrischen Energiespeichers. Bevorzugt kommt dabei eine Flüssigkeitskühlung zum Einsatz, die der Einhaltung der maximal zulässigen Betriebstemperatur der galvanischen Zellen dienen soll. Eine solche Kühlung der galvanischen Zellen stellt sicher, dass sowohl im fahrenden Fahrzeug als auch bei stillstehendem Fahrzeug und insbesondere auch beim Laden des elektrochemischen Energiespeichers die entstehende Wärme der Zellen sicher an die Umgebung oder zur Beheizung des Fahrzeugs in das Fahrzeuginnere abgeführt wird.

Eine solche Flüssigkeitskühlung kann vorzugsweise mit Hilfe eines Kühlmittelkreislaufs und einem daran angeschlossenen Wärmetauscher realisiert werden. Alternativ dazu kann auch ein Kühlmittelkreislauf oder Kältemittelkreislauf mit einem Verdampfer, einem Kondensator und einem Kompressor realisiert werden. Möglich und je nach Anwendungszweck auch vorteilhaft kann eine Kombination aus beiden Kreisläufen sein.

Ein elektrochemischer Energiespeicher kann vorteilhaft auch als Wärmespeicher verwendet werden, der im Zyklus aus Fahrbetrieb, Stillstand und Ladebetrieb gezielt zur Maximierung der Reichweite und zur Minimierung des Energieverbrauchs eines Fahrzeugs im Fahrbetrieb eingesetzt werden kann. Um dies zu erreichen, ist es vorteilhaft, wenn der elektrochemische Energiespeicher vorrangig beim Laden gekühlt wird.

Gemäß einem weiteren bevorzugten Ausführungsbeispiel der vorliegenden Erfindung, das auch mit anderen Ausführungsbeispielen kombinierbar ist, sind in den Zwischenräumen zwischen benachbarten Speicherzellen Latentwärmespeicher angeordnet. Diese Latentwärmespeicher können auch mit den elastischen Körpern identisch oder in diesen untergebracht sein; sie können aber auch in die Wärmeleitkörper integriert sein. Vorzugsweise erstrecken sie sich über die gesamte Länge und Breite des Zwischenraums zwischen den Zellen und enthalten vorzugsweise eine Substanz, deren Schmelzwärme etwas oberhalb der Arbeitstemperatur der Batterie liegt. Die Schmelzwärme solcher Materialien kann zur Kühlung des elektrochemischen Energiespeichers durch Aufnahme der Verlustwärme der Speicherzellen verwendet werden. Zusätzlich oder alternativ zu den integrierten Latentwärmespeichern kann auch ein Wärmeaustausch mit einem extern installierten Wärmespeicher erfolgen.

Ein wesentlicher Vorteil von Ausführungsformen der Erfindung, bei denen die Wärmeleitkörper sich über die volle Länge und Breite der galvanischen Zellen erstrecken, ist darin zu sehen, dass die von der Speicherzelle abgegebene Wärme über die gesamte Länge und Breite der Speicherzelle abgeführt werden kann, was die vertikalen und horizontalen Temperaturgradienten auf der Oberfläche der Speicherzellen und in ihrem inneren vermindert.

Bei der Verwendung von Wärmetauschern ist es besonders vorteilhaft, die Wärmetauscher so anzuordnen, dass alle galvanischen Zellen im Wesentlichen einen gleichen Abstand zum Wärmetauscher haben. Auf diese Weise kann erreicht werden, dass eine gleichmäßige Temperaturverteilung zwischen den galvanischen Zellen zumindest annäherungsweise gewährleistet ist. Besonders vorteilhaft ist es, einen erfindungsgemäßen elektrochemischen Energiespeicher mit einem kombinierten System aus integrierter Kühlung und separatem Wärmetauscher und integrierten Latentwärmespeichern auszurüsten. Bei Bedarf können auch elektrisch betriebene Heizelemente in die Wärmetauscher integriert werden, um ein Aufrechterhalten der Ruhetemperatur des elektrochemischen Energiespeichers in allen Fällen zu gewährleisten.

Zur Klimatisierung des Fahrgastraumes des Fahrzeugs ist es vorteilhaft, einen Kältemittelkreislauf vorzusehen, der vorzugsweise aus einem Verdampfer, einem Expansionsventil, einem Sammler oder Trockner, einem Kondensator und vorzugsweise einem elektrisch angetriebenen Verdichter besteht.

Um die Wärmekapazität des elektrochemischen Energiespeichers möglichst gut zur Aufnahme der Verlustwärme zu nutzen, die beim Laden oder Entladen im elektrochemischen Energiespeicher entsteht, ist es vorteilhaft und damit bevorzugt, die Kühlung der Batterie derart zu steuern, dass beim Ende des Entladevorgangs, gerade die zulässige Höchsttemperatur des elektrochemischen Energiespeichers erreicht wird. Auf diese Weise ist es möglich, einen möglichst großen Anteil der Verlustwärme die beim Lade- oder Entladevorgang entsteht, in der Wärmekapazität des elektrochemischen Energiespeichers zu speichern.

Um dies zu erreichen, ist es im Allgemeinen vorteilhaft, den Temperatursollwert für die Steuerung der Batterieheizung möglichst niedrig, also vorzugsweise etwas oberhalb der minimal zulässigen Betriebstemperatur einzustellen. Dabei wirkt es sich häufig besonders günstig auf die Energiebilanz des elektrochemischen Energiespeichers aus, wenn seine Wärmekapazität zunächst voll ausgenutzt wird, ehe Wärmeenergie über eine Kühlung des elektrochemischen Energiespeichers abgeführt wird.

Im Zusammenhang mit der Beschreibung der vorliegenden Erfindung anhand der Figuren wurden folgende Bezugzeichen verwendet:
- 1: elektrochemischer Energiespeicher
- 2: Gehäuse
- 3: elektrochemische (galvanische) Zelle
- 4: Wärmeleitkörper
- 5: elastische Körper
- 6, 7, 8, 9: Gehäuseteile, Strukturen am oder im Gehäuse
- 10: Pfeile in Richtung der Kraft bzw. des Wärmestroms
- 11: Pfeile in Richtung der Kraft
- 12: Wärmeaustauschelemente
- 13: Kanäle in den Gehäusestrukturen bzw. in den Zwischenprofilen
- 14: Kanäle in den Wärmeleitkörpern
- 15: Ableiter, elektrische Anschlusskontakte

## Patentansprüche

1. Elektrochemischer Energiespeicher (1) mit einem Gehäuse (2), in dem eine Mehrzahl von flachen galvanischen Zellen (3) angeordnet ist,
wobei
zwischen zwei benachbarten flachen galvanischen Zellen jeweils ein flacher Wärmeleitkörper (4) angeordnet ist,
**dadurch gekennzeichnet, dass**
das Gehäuse (2) mindestens eine Wand mit einer elastischen Struktur oder mit elastischen Strukturen (8, 9) aufweist, in die mindestens ein Wärmeleitkörper (4) eingreift.

2. Elektrochemischer Energiespeicher nach Anspruch 1,
**dadurch gekennzeichnet, dass**
die flachen galvanischen Zellen und die flachen Wärmeleitkörper an den Berührungsflächen eine Kraft (11) im Sinne einer Flächenpressung aufeinander ausüben.

3. Elektrochemischer Energiespeicher nach Anspruch 2,
**dadurch gekennzeichnet, dass**
das Gehäuse (2) mindestens eine Wand mit einer Struktur oder mit Strukturen (8, 9) aufweist, in die mindestens ein Wärmeleitkörper (4) so eingreift, dass dieser Wärmeleitkörper in Richtung der an den Berührungsflächen wirkenden Kraft (11) nicht verschiebbar ist.

4. Elektrochemischer Energiespeicher nach einem der vorhergehenden Ansprüche,
**dadurch gekennzeichnet, dass**
die Wärmeleitkörper (4) mit Wärmeaustauschelementen (12) wärmeleitend in Verbindung stehen, die aus dem Gehäuse (2) heraus ragen.

5. Elektrochemischer Energiespeicher nach einem der vorhergehenden Ansprüche,
**dadurch gekennzeichnet, dass**
die Wärmeleitkörper (4) mit Gehäuseteilen (8, 9) wärmeleitend in Verbindung stehen, die Kanäle (13) aufweisen, durch welche ein gasförmiges oder flüssiges Wärmetransportmedium fließen kann.

6. Elektrochemischer Energiespeicher nach einem der vorhergehenden Ansprüche,
**dadurch gekennzeichnet, dass**
die Wärmeleitkörper (4) Kanäle (14) aufweisen, durch welche ein gasförmiges oder flüssiges Wärmetransportmedium fließen kann.

7. Verfahren zum Kühlen oder Erwärmen eines elektrochemischen Energiespeichers mit einem Gehäuse (2), in dem eine Mehrzahl von flachen galvanischen Zellen (3) angeordnet ist,
**dadurch gekennzeichnet, dass**
zwischen zwei benachbarten flachen galvanischen Zellen jeweils ein flacher Wärmeleitkörper (4) derart angeordnet wird, dass mindestens einer der flachen Wärmeleitkörper (4) in eine elastische Struktur oder in elastische Strukturen (8, 9) mindestens einer Wand des Gehäuses (2) eingreift.

8. Verfahren nach Anspruch 7,
**dadurch gekennzeichnet, dass**
die flachen galvanischen Zellen (3) und die flachen Wärmeleitkörper (4) an den Berührungsflächen eine Kraft (11) im Sinne einer Flächenpressung aufeinander ausüben.

9. Verfahren nach Anspruch 8,
**dadurch gekennzeichnet, dass**
das Gehäuse (2) mindestens eine Wand mit einer Struktur oder mit Strukturen (8, 9) aufweist, in die mindestens ein Wärmeleitkörper (4) so eingreift, dass dieser Wärmeleitkörper in Richtung der an den Berührungsflächen wirkenden Kraft (11) nicht verschiebbar ist.

10. Verfahren nach einem der Ansprüche 7 bis 9,
**dadurch gekennzeichnet, dass**
die Wärmeleitkörper (4) mit Wärmetauschelementen (12) wärmeleitend in Verbindung stehen, die aus dem Gehäuse (2) heraus ragen.

11. Verfahren nach einem der Ansprüche 7 bis 10,
**dadurch gekennzeichnet, dass**
die Wärmeleitkörper (4) mit Gehäuseteilen (8, 9) wärmeleitend in Verbindung stehen, die Kanäle (13) aufweisen, durch welche ein gasförmiges oder flüssiges Wärmetransportmedium fließt.

12. Verfahren nach einem der Ansprüche 7 bis 11,
**dadurch gekennzeichnet, dass**
die Wärmeleitkörper (4) Kanäle (14) aufweisen, durch welche ein gasförmiges oder flüssiges Wärmetransportmedium fließt.

## Claims

1. An electrochemical energy store (1) having a casing (2) in which a plurality of flat galvanic cells (3) is arranged,
wherein
one flat heat conducting body (4) each is respectively arranged between two adjacent flat galvanic cells;
**characterized in that**
the casing (2) comprises at least one wall having an elastic structure or elastic structures (8, 9) in which at least one heat conducting body (4) engages.

2. The electrochemical energy store according to claim 1,
**characterized in that**
the flat galvanic cells and the flat heat conducting body exert a force (11) upon each other in the sense of a surface pressure at the contact surfaces.

3. The electrochemical energy store according to claim 2,
**characterized in that**
the casing (2) comprises at least one wall having a structure or structures (8, 9) in which at least one heat conducting body (4) engages such that said heat conducting body is not displaceable in the direction of the force (11) acting on the contact surfaces.

4. The electrochemical energy store according to any one of the preceding claims,
**characterized in that**
the heat conducting body (4) is thermoconductively connected to heat exchanging elements (12) protruding from the casing (2).

5. The electrochemical energy store according to any one of the preceding claims,
**characterized in that**
the heat conducting body (4) is thermoconductively connected to casing sections (8, 9) comprising channels (13) through which a gaseous or liquid heat transfer medium can flow.

6. The electrochemical energy store according to any one of the preceding claims,
**characterized in that**
the heat conducting body (4) comprises channels (14) through which a gaseous or liquid heat transfer medium can flow.

7. A method for cooling or heating an electrochemical energy store having a casing (2) in which a plurality of flat galvanic cells (3) is arranged,
**characterized in that**
one flat heat conducting body (4) each is respectively arranged between two adjacent flat galvanic cells such that at least one of said flat heat conducting bodies (4) engages in an elastic structure or in elastic structures (8, 9) of at least one wall of the casing (2).

8. The method according to claim 7,
**characterized in that**
the flat galvanic cells and the flat heat conducting body exert a force (11) upon each other in the sense of a surface pressure at the contact surfaces.

9. The method according to claim 8,
**characterized in that**
the casing (2) comprises at least one wall having a structure or structures (8, 9) in which at least one heat conducting body (4) engages such that said heat conducting body is not displaceable in the direction of the force (11) acting on the contact surfaces.

10. The method according to any one of claims 7 to 9,
**characterized in that**
the heat conducting body (4) is thermoconductively connected to heat exchanging elements (12) protruding from the casing (2).

11. The method according to any one of claims 7 to 10,
**characterized in that**
the heat conducting body (4) is thermoconductively connected to casing sections (8, 9) comprising channels (13) through which a gaseous or liquid heat transfer medium flows.

12. The method according to any one of claims 7 to 11,
**characterized in that**
the heat conducting body (4) comprises channels (13) through which a gaseous or liquid heat transfer medium flows.

## Revendications

1. Accumulateur d'énergie électrochimique (1) comprenant une enceinte (2), dans laquelle sont disposées une pluralité de cellules galvaniques plates (3), dans lequel
respectivement un corps thermoconducteur (4) plat est disposé entre deux cellules galvaniques plates voisines,
**caractérisé en ce que**
l'enceinte (2) présente au moins une paroi avec une structure élastique ou des structures élastiques (8, 9), dans laquelle/lesquelles au moins un corps thermoconducteur (4) pénètre.

2. Accumulateur d'énergie électrochimique selon la revendication 1,
**caractérisé en ce que**
les cellules galvaniques plates et les corps thermoconducteurs plats exercent les uns sur les autres, au niveau des surfaces de contact, une force (11) au sens d'une pression de surface.

3. Accumulateur d'énergie électrochimique selon la revendication 2,
**caractérisé en ce que**
l'enceinte (2) présente au moins une paroi avec une structure ou des structures (8, 9), dans laquelle/lesquelles au moins un corps thermoconducteur (4) pénètre de telle sorte que ledit corps thermoconducteur ne peut pas être déplacé par coulissement en direction de la force (11) agissant au niveau des surfaces de contact.

4. Accumulateur d'énergie électrochimique selon l'une quelconque des revendications précédentes,
**caractérisé en ce que**
les corps thermoconducteurs (4) sont reliés de manière thermoconductrice avec des éléments d'échange de chaleur (12), qui font saillie de l'enceinte (2).

5. Accumulateur d'énergie électrochimique selon l'une quelconque des revendications précédentes,
**caractérisé en ce que**
les corps thermoconducteurs (4) sont reliés de manière thermoconductrice avec des parties de l'enceinte (8, 9), qui présentent des conduits (13), à travers lesquels un milieu caloporteur gazeux ou liquide peut s'écouler.

6. Accumulateur d'énergie électrochimique selon l'une quelconque des revendications précédentes,
**caractérisé en ce que**
les corps thermoconducteurs (4) présentent des conduits (14), à travers lesquels un milieu caloporteur gazeux ou liquide peut s'écouler.

7. Procédé servant à refroidir ou à réchauffer un accumulateur d'énergie électrochimique comprenant une enceinte (2), dans laquelle sont disposées une pluralité de cellules galvaniques plates (3),
**caractérisé en ce que**
respectivement un corps thermoconducteur (4) plat est disposé entre deux cellules galvaniques plates voisines de telle manière qu'au moins un des corps thermoconducteurs (4) plats pénètre dans une structure élastique ou dans des structures élastiques (8, 9) d'au moins une paroi de l'enceinte (2).

8. Procédé selon la revendication 7,
**caractérisé en ce que**
les cellules galvaniques plates (3) et les corps thermoconducteurs (4) plats exercent les uns sur les autres, au niveau des surfaces de contact, une force (11) au sens d'une pression de surface.

9. Procédé selon la revendication 8,
**caractérisé en ce que**
l'enceinte (2) présente au moins une paroi avec une structure ou des structures (8, 9), dans laquelle/lesquelles au moins un corps thermoconducteur (4) pénètre de telle sorte que ledit corps thermoconducteur ne peut pas être déplacé par coulissement en direction de la force (11) agissant au niveau des surfaces de contact.

10. Procédé selon l'une quelconque des revendications 7 à 9,
**caractérisé en ce que**
les corps thermoconducteurs (4) sont reliés de manière thermoconductrice avec des éléments d'échange de chaleur (12), qui font faillie de l'enceinte (2).

11. Procédé selon l'une quelconque des revendications 7 à 10,
**caractérisé en ce que**
les corps thermoconducteurs (4) sont reliés de manière thermoconductrice avec des parties de l'enceinte (8, 9), qui présentent des conduits (13), à travers lesquels un milieu caloporteur gazeux ou liquide s'écoule.

12. Procédé selon l'une quelconque des revendications 7 à 11,
**caractérisé en ce que**
les corps thermoconducteurs (4) présentent des conduits (14), à travers lesquels un milieu caloporteur gazeux ou liquide s'écoule.
